# DEMANDE DE BREVET EUROPEEN

(11) **EP 1 340 934 A2**
(43) Date de publication de la demande: **03.09.2003**
(21) Numéro de dépôt: 03290327.0
(22) Date de dépôt: 10.02.2003
(51) Int. Cl.: F16L 11/06, F16L 11/12

(54) **Tuyau comportant trois couches**

(30) Priorité: 18.02.2002 FR 0201994
(71) Demandeur: HUTCHINSON, 75008 Paris (FR)
(72) Inventeur: Baune, Francis, 45220 Saint Germain (FR)
(74) Mandataire: Corizzi, Valérie

(57) **Abrégé**

Tuyau comportant au moins 3 couches :
- la couche interne (10) est constituée d'une résine fluorée F à base de tétrafluoroéthylène, d'hexafluoroéthylène et de fluorure de vinylidène ;
- la couche intermédiaire (12) est constituée d'un caoutchouc d'épichlorhydrine ECO, contenant un sel d'organophosphonium et un agent ignifugeant ;
- la couche externe (16) est constituée d'un mélange d'un caoutchouc nitrile/butadiène et d'une résine chlorure de polyvinyle NBR/PVC. Ces tuyaux ont des propriétés élastiques et d'imperméabilité aux carburants améliorées.

## Description

La présente invention a pour objet des tuyaux destinés à être utilisés comme éléments de circuits de carburant, ces tuyaux étant constitués d'au moins : une couche interne constituée d'une résine fluorée à base de tétrafluoroéthylène, d'hexafluoroéthylène et de fluorure de vinylidène, une couche intermédiaire constituée d'un caoutchouc d'épichlorhydrine contenant un sel d'organophosphonium et un agent ignifugeant, une couche externe constituée d'un mélange d'un caoutchouc nitrile/butadiène et d'une résine chlorure de polyvinyle.

De tels tuyaux présentent de meilleures propriétés élastiques que ceux de l'art antérieur et sont moins coûteux à produire.

On connaît, par le document EP-1 065 238, des tuyaux comportant une couche interne constituée d'un mélange d'un caoutchouc nitrile/butadiène et d'une résine de chlorure de polyvinyle et une couche externe constituée d'un caoutchouc d'épichlorhydrine.

Toutefois, les tuyaux constitués de ce matériau présentent l'inconvénient de ne pas avoir une bonne imperméabilité aux carburants.

On connaît également, par le document EP-0 739 712, des tuyaux constitués d'une couche interne comprenant une gomme acrylonitrile - butadiène et une couche externe constituée d'un tripolymère dérivé du tétrafluoroéthylène de l'hexafluoropropylène et du fluorure de vinylidène. Toutefois, les tuyaux constitués de ce matériau présentent l'inconvénient de ne pas avoir la couche barrière imperméable directement en contact avec le carburant.

Le document US-5,588,469 décrit des tuyaux comportant une couche intermédiaire d'une résine fluorée à base de tétrafluoroéthylène, d'hexafluoropropylène et de fluorure de vinylidène, une couche interne constituée d'un caoutchouc nitrile butadiène, éventuellement mélangé avec une résine de chlorure de polyvinyle, et une couche externe constituée d'un caoutchouc d'épichlorhydrine. Toutefois, ces tuyaux présentent présentent l'inconvénient de ne pas avoir la couche barrière imperméable directement en contact avec le carburant.

Ainsi, c'est avec étonnement que la demanderesse a découvert des tuyaux d'une structure nouvelle et remédiant aux inconvénients des tuyaux de l'art antérieur.

L'invention a pour objet des tuyaux comportant au moins 3 couches, caractérisés en ce que :
- la couche interne est constituée d'une résine fluorée notée résine F à base de tétrafluoroéthylène, d'hexafluoroéthylène et de fluorure de vinylidène ;
- la couche intermédiaire est constituée d'un caoutchouc d'épichlorhydrine, notée ECO, contenant un sel d'organophosphonium et un agent ignifugeant ;
- la couche externe est constituée d'un mélange d'un caoutchouc nitrile/butadiène et d'une résine chlorure de polyvinyle, noté NBR/PVC.

Les tuyau selon l'invention présentent de nombreux avantages :
- un meilleur comportement mécanique du tuyau,
- une meilleure tenue sous collier et
- de meilleures propriétés élastiques.

En outre, les tuyaux selon l'invention, à performances équivalentes ou supérieures, sont moins coûteux que ceux de l'art antérieur.

Le procédé consistant à ajouter à l'élastomère un agent ignifugeant qui est un activateur du sel d'organophosphonium pour l'amorçage d'une réaction de déhydrofluorination du polymère fluoré permettant la création d'une double liaison dans l'unité monomère du polymère fluoré et la liaison chimique de ce polymère avec l'élastomère lors de la réticulation de ce dernier est déjà connu par le document FR-2 776 227.

Ce procédé permet de rendre l'élastomère incombustible et de le faire adhérer très fortement au polymère fluoré, par liaison chimique entre eux, par addition d'élastomère d'un sel d'organophosphonium et d'un agent ignifugeant qui réagit avec le sel d'organophosphonium pour déclencher une réaction de déhydrofluorination du polymère fluoré, ayant pour conséquence la création d'une double liaison dans l'unité monomère de ce polymère fluoré, cette double liaison permettant d'assurer une liaison chimique avec l'élastomère lors de la réticulation de ce dernier.

L'adhérence ainsi obtenue entre un polymère fluoré et un élastomère est 2 à 3 fois plus élevée qu'avec les procédés connus de la technique antérieure.

Dans un mode de réalisation préféré de l'invention, l'agent ignifugeant comprend du trioxyde d'antimoine.

Le polymère fluoré est un terpolymère de tétrafluoroéthylène, d'hexafluoropropylène et de fluorure de vinylidène, du type thermoplastique ou du type élastomère.

Les polymères fluorés auxquels l'invention est applicable sont les terpolymères de tétrafluoroéthylène, d'hexafluoropropylène et de fluorure de vinylidène et notamment ceux qui sont commercialisés sous les dénominations THV (un thermoplastique) et FKM (un élastomère).

Selon l'invention, les couches de résine F, d'ECO et de résine NBR/PVC sont avantageusement co-extrudées ou extrudées séquentiellement.

Dans le mode préféré de réalisation de l'invention, les couches de résine F et d'ECO sont recouvertes d'une couche de renfort textile.

Un tel tuyau présente une excellente imperméabilité au carburant pour une épaisseur faible de la couche de polymère fluoré, de très bonnes caractéristiques mécaniques notamment au niveau de la souplesse et de la résistance au délaminage, et une bonne résistance aux huiles et au carburant, à l'ozone, au froid, à la chaleur et à la flamme.

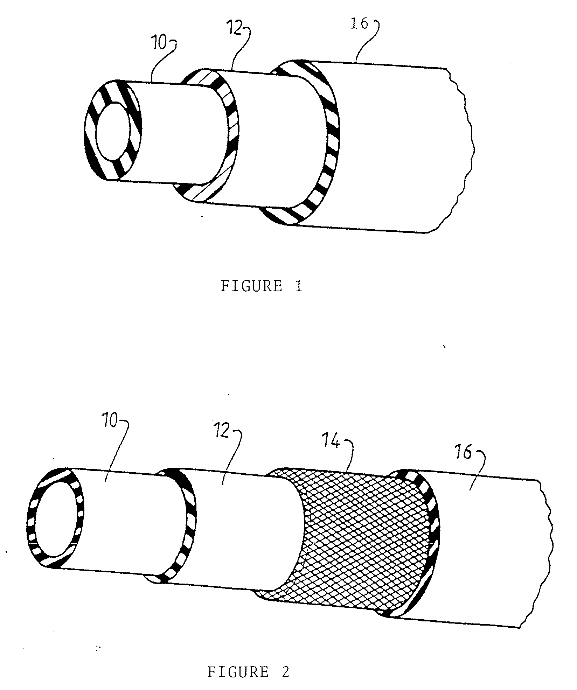

L'invention sera mieux comprise et d'autres caractéristiques, détails et avantages de celle-ci apparaîtront plus clairement à la lecture de la description qui suit, faite à titre d'exemple en référence aux dessins annexés dans lesquels la figure 1 représente schématiquement un tuyau de transport de carburant selon l'invention.

Le caoutchouc d'épichlorhydrine utilisé dans la présente invention peut être un polymère d'épichlorhydrine, un copolymère d'épichlorhydrine et d'oxyde d'éthylène ou, de préférence, un terpolymère d'épichlorhydrine, d'oxyde d'éthylène et d'allyl glycidyl éther qui présente une meilleure résistance à l'ozone et au froid que les deux composés précédents, et une possibilité d'association à des polymères insaturés.

Préférentiellement, ce caoutchouc d'épichlorhydrine comprend 15 à 23 parts en poids environ de trioxyde d'antimoine, de 50 à 60 parts en poids environ de noir de carbone N550 et de 2,5 à 10 parts en poids de plastifiant pour 100 parts en poids d'élastomère.

Plus généralement, la quantité de trioxyde d'antimoine peut être comprise entre 10 et 25 parts en poids ou davantage, une partie du trioxyde d'antimoine étant consommée par réaction avec le sel d'organophosphonium.

Des essais ont montré qu'un tel caoutchouc d'épichlorhydrine est incombustible, c'est-à-dire qu'il ne brûle pas au contact d'une flamme ou s'éteint dès qu'il n'est plus au contact d'une flamme.

Ce tuyau tri couche est donc particulièrement bien adapté à la fabrication d'éléments de circuit de carburant, tels notamment que des tuyaux d'alimentation en carburant, de retour de vapeurs de carburant ou de remplissage de réservoir.

Avantageusement, le caoutchouc d'épichlorhydrine ne comprend pas de plomb.

On peut réaliser par extrusion un tuyau du type représenté schématiquement en figure 1, comprenant une couche interne mince 10 de THV, recouverte d'une couche 12 d'un caoutchouc d'épichlorhydrine selon l'invention, en particulier du type GECO (un terpolymère d'épichlorhydrine, d'oxyde d'éthylène et d'allylglycidylether), elle-même recouverte d'une couche 16 de NBR/PVC.

Typiquement, une épaisseur de THV de 0,10 à 0,25 mm est suffisante pour obtenir une perméabilité de 1 g/m²/jour pour un carburant pour véhicule automobile comprenant 5% de méthanol et 2% d'éthanol.

On ajoute au caoutchouc d'ECO pour le faire adhérer parfaitement au polymère fluoré de la couche interne 10, des agents d'adhésion tels que ceux commercialisés sous les dénominations VITON CURATIVE 20 et DYNAMAR FX-5166 par DU PONT DE NEMOURS et par 3M respectivement, le VITON CURATIVE 20 étant composé essentiellement d'un chlorure d'organophosphonium, tandis que le DYNAMAR FX-5166 est un mélange d'un chlorure d'organophosphonium, de dioxyde de silicone, de sulfolane et de méthanol.

Dans un mode de réalisation préféré de l'invention, on peut ajouter à la composition précipitée de caoutchouc d'ECO 5 parts en poids de VITON CURATIVE 20 et 1,5 parts en poids de DYNAMAR FX-5166, pour 100 parts en poids d'élastomère.

Il est bien entendu possible de n'utiliser qu'un seul de ces agents d'adhésion.

De façon générale, on ajoute à l'élastomère environ 1,5 parts en poids de sel d'organophosphonium pour 100 parts en poids de caoutchouc d'ECO.

Selon l'invention, une épaisseur d'ECO de 0,5 à 0,7 mm donne un résultat satisfaisant.

De préférence, la couche de caoutchouc NBR/PVC est d'une épaisseur comprise entre 3 et 4 mm.

Le tuyau de la figure 1 est notamment destiné à former un tuyau de remplissage de réservoir.

Le tuyau représenté en figure 2 comprend une couche interne mince 10 de THV, recouverte d'une couche 12 d'ECO, une couche 14 de renfort textile d'un type classique (par exemple un tressage de fils de polyamide ou autre), et une couche extérieure 16 de recouvrement ou de protection en NBR/PVC.

Un tel tuyau est utilisable comme tuyau d'alimentation en carburant ou de retour de vapeurs de carburant.

Lorsque cela est nécessaire ou utile, par exemple pour des raisons d'étanchéité à la connexion sur un embout, on peut également former une couche mince d'ECO sur la face interne de la couche 10 de THV du tuyau représenté en figure 2.

Des essais de résistance au pelage ont été effectués sur des échantillons de produits composites selon l'invention. On a constaté que les tuyaux selon l'invention présentaient une résistance au pelage supérieure ou égale à 15 daN/cm.

## Revendications

1. Tuyau comportant au moins 3 couches, **caractérisé en ce que** :
- la couche interne (10) est constituée d'une résine fluorée F à base de tétrafluoroéthylène, d'hexafluoroéthylène et de fluorure de vinylidène ;
- la couche intermédiaire (12) est constituée d'un caoutchouc d'épichlorhydrine ECO, contenant un sel d'organophosphonium et un agent ignifugeant ;
- la couche externe (16) est constituée d'un mélange d'un caoutchouc nitrile/butadiène et d'une résine chlorure de polyvinyle NBR/PVC.

2. Tuyau selon la revendication 1, **caractérisé en ce que** l'agent ignifugeant comprend du trioxyde d'antimoine.

3. Tuyau selon l'une quelconque des revendications précédentes, **caractérisé en ce que** la résine fluorée F constituant la couche interne (10) est un thermoplastique.

4. Tuyau selon l'une quelconque des revendications précédentes, **caractérisé en ce que** la résine fluorée F constituant la couche interne (10) est un élastomère.

5. Tuyau selon l'une quelconque des revendications précédentes, **caractérisé en ce que** les couches de résine F (10), d'ECO (12) et de résine NBR/PVC (16) sont co-extrudées

6. Tuyau selon l'une quelconque des revendications précédentes, **caractérisé en ce que** les couches de résine F (10), d'ECO (12) et de résine NBR/PVC (16) sont extrudées séquentiellement.

7. Tuyau selon l'une quelconque des revendications précédentes, **caractérisé en ce que** les couches de résine F (10) et d'ECO (12) sont recouvertes d'une couche de renfort textile (14).

8. Tuyau selon l'une quelconque des revendications précédentes, **caractérisé en ce que** le caoutchouc d'épichlorhydrine constituant la couche intermédiaire (12) est choisi parmi un polymère d'épichlorhydrine, un copolymère d'épichlorhydrine et d'oxyde d'éthylène et un terpolymère d'épichlorhydrine, d'oxyde d'éthylène et d'allyl glycidyl éther.

9. Tuyau selon l'une quelconque des revendications précédentes, **caractérisé en ce que** le caoutchouc d'épichlorhydrine comprend entre 10 et 25 parts en poids de trioxyde d'antimoine pour 100 parts en poids d'élastomère.

10. Tuyau selon l'une quelconque des revendications précédentes, **caractérisé en ce que** le caoutchouc d'épichlorhydrine comprend 15 à 23 parts en poids de trioxyde d'antimoine, de 50 à 60 parts en poids de noir de carbone et de 2,5 à 10 parts en poids de plastifiant pour 100 parts en poids d'élastomère.

11. Tuyau selon l'une quelconque des revendications précédentes, **caractérisé en ce que** le caoutchouc d'épichlorhydrine ECO constituant la couche intermédiaire (12) contient un chlorure d'organophosphonium.

12. Tuyau selon l'une quelconque des revendications précédentes, **caractérisé en ce que** le caoutchouc d'épichlorhydrine ECO constituant la couche intermédiaire (12) contient un mélange d'un chlorure d'organophosphonium, de dioxyde de silicone, de sulfolane et de méthanol.

13. Tuyau selon l'une quelconque des revendications précédentes, **caractérisé en ce que** le caoutchouc d'épichlorhydrine ECO constituant la couche intermédiaire (12) contient 1,5 parts en poids de sel d'organophosphonium pour 100 parts en poids de caoutchouc d'ECO.

14. Tuyau selon l'une quelconque des revendications précédentes, **caractérisé en ce que** le caoutchouc d'épichlorhydrine constituant la couche intermédiaire (12) ne comprend pas de plomb.

15. Tuyau selon l'une quelconque des revendications précédentes, **caractérisé en ce que** la couche externe (16) de caoutchouc NBR/PVC est d'une épaisseur comprise entre 3 et 4 mm.

16. Tuyau selon l'une quelconque des revendications précédentes, **caractérisé en ce que** l'épaisseur de la couche (10) de résine F est comprise entre 0,10 et 0,25 mm.

17. Tuyau selon l'une quelconque des revendications précédentes, **caractérisé en ce qu'**il comporte en outre une couche d'ECO sur la face interne de la couche interne (10).

18. Tuyau selon l'une quelconque des revendications précédentes, **caractérisé en ce qu'**il comporte une résistance au pelage supérieure ou égale à 15 daN/cm.

19. Utilisation d'un tuyau selon l'une quelconque des revendications précédentes pour la fabrication d'éléments de circuit de carburant.
